(19) Europäisches Patentamt
European Patent Office
Office européen des brevets

(11) **EP 4 126 470 B1**

(12) **EUROPEAN PATENT SPECIFICATION**

(45) Date of publication and mention
of the grant of the patent:
**17.04.2024 Bulletin 2024/16**

(21) Application number: **21712514.5**

(22) Date of filing: **18.03.2021**

(51) International Patent Classification (IPC):
**B25J 9/00** (2006.01)

(52) Cooperative Patent Classification (CPC):
**B25J 9/0063**

(86) International application number:
**PCT/EP2021/057009**

(87) International publication number:
**WO 2021/191054 (30.09.2021 Gazette 2021/39)**

(54) **TRANSLATIONAL PARALLEL MECHANISM**

TRANSLATORISCHER PARALLELMECHANISMUS

MÉCANISME PARALLÈLE DE TRANSLATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2020 IT 202000006100**

(43) Date of publication of application:
**08.02.2023 Bulletin 2023/06**

(73) Proprietor: **Università Degli Studi Di Ferrara 44121 Ferrara (IT)**

(72) Inventor: **DI GREGORIO, Raffaele 44122 Ferrara (IT)**

(74) Representative: **Morabito, Sara et al Cantaluppi & Partners S.r.l. Piazzetta Cappellato Pedrocchi, 18 35122 Padova (IT)**

(56) References cited:
**RU-U1- 110 326**

- CARBONARI LUCA ET AL: "Kinematics of a Novel 3-URU Reconfigurable Parallel Robot", 2018 INTERNATIONAL CONFERENCE ON RECONFIGURABLE MECHANISMS AND ROBOTS (REMAR), IEEE, 20 June 2018 (2018-06-20), pages 1-7, XP033394623, DOI: 10.1109/REMAR.2018.8449898
- SYAMSUL HUDA ET AL: "Kinematic design of 3-URU pure rotational parallel mechanism to perform precise motion within a large workspace", MECCANICA, KLUWER ACADEMIC PUBLISHERS, DO, vol. 46, no. 1, 10 December 2010 (2010-12-10), pages 89-100, XP019875434, ISSN: 1572-9648, DOI: 10.1007/S11012-010-9400-2

EP 4 126 470 B1

**Description**

Field of the Invention

The present invention refers to a translational parallel mechanism (TPM), specifically to a particular TPM of the 3-URU type, also combinable with other devices for the realization of mechanisms that are not simply translational.

Background of the Invention

The invention finds particular, though not exclusive, application in the technical sector pertaining to industrial robots intended for the movement and positioning of objects in space by means of a gripper as well as to the technical sectors related to measuring machines, haptic devices, joysticks, and 3D printers.

TPMs are usually used alone and/or with other mechanisms to make devices, in particular industrial robots, both with three degrees of freedom (spatial translation, known with the acronym 3T), and with four degrees of freedom for 3T1R movements (spatial translation + a rotation around an axis with fixed direction) of SCARA type to perform pick-and-place tasks on a work surface and/or assembly tasks. An example of an industrial robot is the Delta robot.

Examples of devices for moving and positioning elements in space are also described in US patents US 4,976,582 A and US 6,729,202 B2.

Furthermore, examples of parallel manipulators of type 3-URU (i.e., with three kinematic chains, each defined by the series consisting of a first universal joint (U), a rotational pair (R) and a second universal joint (U), which connect in parallel the gripper (platform) to the frame (base)) are described in the following publications:

- Huda, S.; Takeda, Y. Kinematic analysis and synthesis of a 3-URU pure rotational parallel mechanism with respect to singularity and workspace. J. of Adv. Mech. Design, System and Manufacturing 2007, 1(1), 81-92, DOI: 10.1299/jamdsm.1.81;
- Huda, S.; Takeda, Y. Kinematic Design of 3-URU Pure Rotational Parallel Mechanism with Consideration of Uncompensatable Error. J. of Adv. Mech. Design, Systems, and Manufacturing 2008, 2(5), 874-886, DOI: 10.1299/jamdsm.2.874;

- Carbonari, L.; Corinaldi, D.; Palpacelli, M.; Palmieri, G.; Callegari, M. A Novel Reconfigurable 3-URU Parallel Platform. In Advances in Service and Industrial Robotics, Ferraresi, C., Quaglia, G., Eds.; Springer: Dordrecht, Germany, 2018; pp. 63 - 73, ISBN: 978-3-319-61275-1;
- L. Carbonari, D. Corinaldi, G. Palmieri and M. Palpacelli, "Kinematics of a Novel 3-URU Reconfigurable Parallel Robot," 2018 International Conference on Reconfigurable Mechanisms and Robots (ReMAR), Delft, 2018, pp. 1-7, doi: 10. 11 09/REMAR. 20 18.8449898; and
- Huda, S., Takeda, Y. & Hanagasaki, S., "Kinematic design of 3-URU pure rotational parallel mechanism to perform precise motion within a large workspace", Meccanica 46, 89-100 (2011). https://doi.org/10.1007/s11012-010-9400-2.

A spherical mechanism with three degrees of freedom is described in patent document RU 110 326 U1.

However, it is observed that the known translational parallel manipulators with 3-URU architecture suffer from one or more of the following limitations: unsatisfactory performance in terms of precision and/or speed, region of the operational space suitable for placing the useful workspace that is relatively limited, unwanted singular configurations, significant construction complexity and excessive overall size.

Summary of the Invention

The object of the present invention is to provide a parallel translational mechanism that is structurally and functionally conceived to overcome at least one limit of the aforementioned prior art.

This object is achieved by means of a translational parallel mechanism realized in accordance with the independent claim attached to the present description.

The independent claim relates to a translational parallel mechanism comprising three legs, in which each leg is a kinematic chain which comprises:

- a first cardan joint comprising a first revolute pair and a second revolute pair,
- a first member connected, at a first end thereof, to a frame by means of the first cardan joint so that the rotation axis of the first revolute pair is fixed to the frame, and connected, at a second end thereof, to a first end of a second member by means of a third revolute pair,
- a second cardan joint comprising a fourth revolute pair and a fifth revolute pair,

- the second member which is connected, at a second end thereof, to a mobile platform by means of the second cardan joint in such a manner that the rotation axis of the fifth revolute pair is fixed to the mobile platform,

wherein the first revolute pairs and the fifth revolute pairs define the ends of the respective kinematic chains, wherein for each leg the rotation axis of the first and fifth revolute pairs are parallel and the rotation axis of the second, third and fourth revolute pairs are parallel, wherein the rotation axes of the first revolute pairs of each leg are arranged in such a way that they are neither coplanar nor parallel to a single plane and in such a way that they are incident at a single fixed point in the frame or that the distance between any two of these rotation axes is less than or equal to 20% of the diameter of the circumference passing through the centers of the first cardan joints of the three legs, and wherein the rotation axes of the fifth revolute pairs of each leg are arranged in such a way that they are neither coplanar nor parallel to a single plane and in such a way that they are incident at a single fixed point in the mobile platform or that the distance between any two of these rotation axes is less than or equal to 20% of the diameter of the circumference passing through the centers of the first cardan joints of the three legs.

Preferred features of the invention are defined in the dependent claims.

In the context of the present invention, the operational space of a mobile platform is identified by an n-dimensional hyperspace with $n \leq 6$ whose coordinates are the geometric parameters that identify the posture of the mobile platform. In the case of a TPM (translational parallel mechanism), the posture of the mobile platform is uniquely determined when the coordinates of a point of the mobile platform are assigned in a Cartesian reference system fixed to the frame (base). Therefore, in a TPM, the operational space is three-dimensional and coincides with the Euclidean space mapped by a Cartesian system.

In the context of the present invention, the singular configurations (singularities) of a parallel mechanism are those in which the relationship between the characteristic vectors of the velocity field of the mobile platform of the TPM (i.e., platform's angular velocity and velocity of a platform point) are not in one-to-one correspondence any longer with the first derivatives with respect to time of TPM's actuated-joint variables (actuated-joint rates). The relationship between the characteristic vectors of the velocity field of the mobile platform and TPM's actuated-joint rates is a linear mapping, named instantaneous input-output relationship.

A list of publications concerning the singularities of parallel mechanisms is shown below:

- Zlatanov, D.; Bonev, I.A.; Gosselin, C.M. Constraint Singularities as C-Space Singularities. In Advances in Robot Kinematics: Theory and Applications, Lenarcic, J., Thomas, F., Eds.; Springer: Dordrecht, Germany, 2002; pp. 183 - 192, ISBN: 978-90-481-6054-9;
- Gosselin C.M., Angeles J. Singularity analysis of closed-loop kinematic chains. IEEE Trans. Robot. Automat. 1990, 6(3), 281-290;
- Zlatanov D., Fenton R.G., Benhabib B. A unifying framework for classification and interpretation of mechanism singularities. ASME J. Mech. Des. 1995, 117(4), 566-572 .

The translational parallel mechanism (hereinafter also called TPM for brevity), object of the invention, comprises two rigid bodies, one mobile (platform) and the other fixed (base or also called frame) connected to one another through three kinematic chains (legs) of URU type.

Furthermore, a rigid body that is part of the TPM object of the invention will be indicated with the term "member", so that the mechanism can be described as a set of members interconnected with each other through kinematic pairs.

In the context of the present invention, the phrase "rigid body" means a solid made of material whose deformations are small compared to the dimensions of the solid itself and, in any case, such as they do not compromise the functioning of the mechanism, such as, for example, plates, rods and other mechanical components that enter into the composition of a real machine.

The kinematic chain of each leg comprises a first universal joint (U), also called cardan joint, which consists of two revolute pairs (R) with axes that are orthogonal and incident at a point, called the center of the first cardan joint, which connects an intermediate member (cross link) on one side to the frame and on the other to a first movable member of the leg. The center of the first cardan joint is fixed in the frame.

The first revolute pair of this first cardan joint is the first revolute pair of the leg, it connects the frame to the cross link of the cardan joint and has an axis that is fixed to the frame. The second revolute pair of this same joint is the second revolute pair of the leg and connects the cross link to the first movable member of the leg. The first movable member of the leg is also connected at a second end thereof to a first end of a second movable member of the leg by means of another revolute pair, which is the third revolute pair of the leg and has an axis parallel to the axis of the second revolute pair of the leg.

The second mobile member of the leg is also connected at a second end thereof to the cross link of a second cardan joint by means of a revolute pair, which is the fourth revolute pair of the leg and has its axis parallel to the axis of the second and third revolute pairs of the leg. In addition, the cross link of this second cardan joint is connected through another revolute pair, which is the fifth (and last) revolute pair of the leg, to the mobile platform and has an axis that is fixed in the platform itself.

The rotation axis of the fourth revolute pair of the leg and the rotation axis of the fifth revolute pair of the leg are orthogonal to each other and intersect one another at a point. The intersection point of these rotation axes is defined as the center of the second cardan joint (U) of the leg and is a fixed point of the platform.

In short, the URU kinematic chain of each leg can also be indicated, in greater detail, as of type R⊥R∥R∥R⊥R, that is, consisting of five revolute pairs (identified with the capital letter R) in series, of which the three intermediate R-pairs have rotation axes parallel to each other (the symbol ∥, interposed between two Rs, indicates that the axes of the two adjacent R-pairs are parallel) and the two R-pairs at the ends have rotation axes perpendicular to those of the other three (the symbol ⊥, interposed between two Rs, indicates that the rotation axes of the two adjacent revolute pairs are orthogonal and intersect one another).

According to one aspect of the invention, the three URU-type legs are mounted in such a way that the axis of the first revolute pair of each leg is parallel to the axis of the fifth revolute pair of the same leg. Furthermore, the frame (base) and the mobile platform are dimensioned in such a way that the three axes of the three revolute pairs (one per leg) fixed in the frame (base) and the three axes of the three revolute pairs (one per leg) fixed in the platform allow this assembly.

During the motion of the platform with respect to the base, the axes of the second revolute pair, of the third revolute pair and of the fourth revolute pair of each leg remain parallel to each other for construction reasons. Furthermore, the aforementioned particular assembly of the legs ensures that the orientation of the platform with respect to the base remains constant (that is, the platform is constrained to translate with respect to the base) as long as particular configurations, named "constraint singularities" in the literature, are not reached. The particular geometry of platform, base and legs together with the particular choice of kinematic pairs to be actuated determines the width of the region of the machine's operational space within which the platform can move without encountering singularities. Therefore, the identification of a particular geometry of 3-URU type and of a particular set of joints to be actuated that ensure a large region free of singularities is a relevant aspect of the invention.

According to an aspect of the invention, the three axes of the three revolute pairs (one per leg) fixed in the base, that is, those of the first revolute pairs of each leg, are arranged in such a way that they are neither coplanar nor parallel to a single plane, and that, if they are not incident in a single point of the base, the distance between them is less than or equal to 20% of the diameter of the circumference passing through the three centers of the three cardan joints (one for each leg) that connect the base to the three legs.

In particular, the three axes of the three revolute pairs (one for each leg) fixed in the base, that is, those of the first revolute pairs of each leg, are arranged in such a way that the angle formed by any two of these axes is between 70° and 110°.

According to an aspect of the invention, the three axes of the three revolute pairs (one for each leg) fixed in the platform, that is, those of the fifth revolute pairs of each leg, are arranged in such a way that they are neither coplanar nor parallel to a single plane, and that, if they are not incident in a single point of the platform, the distance between them is less than or equal to 20% of the diameter of the circumference passing through the three centers of the three cardan joints (one per leg) that connect the base to the three legs.

In particular, the three axes of the three revolute pairs (one for each leg) fixed in the platform, that is, those of the fifth revolute pairs of each leg, are arranged in such a way that the angle formed by any two of these axes is between 70° and 110°.

It should be noted that the angle formed by any two of the rotation axes of the first revolute pairs or by any two of the rotation axes of the fifth revolute pairs is the angle between any two lines parallel to them and passing through a point of space (in particular, it is the angle between two skew lines as defined in "Geometry". For instance, see D. Pedoe, "Geometry. A comprehensive introduction", Dover, reprint (1988)). According to one aspect of the invention, in each leg, there is only one actuated joint and the actuated joint is the second revolute pair of the leg.

The translational parallel mechanism according to the invention therefore differs from the known parallel manipulators of the 3-URU type, which have both the rotation axes of the revolute pairs adjacent to the base and the rotation axes of the revolute pairs adjacent to the platform coplanar or, when they are not coplanar, they actuate the first revolute pair of each leg.

It must be noted that both the variation of the arrangement of these rotation axes and the choice of the revolute pairs to actuate entail a substantial change in the behavior of a 3-URU mechanism both in terms of redistribution of the loads among the members of the mechanism and in functional terms (workspace).

The characteristics of the translational parallel mechanism according to the invention make this TPM particularly appreciable in terms of the width of the region of the operational space of the mobile platform which is devoid of singularities. The wider this region, the wider the TPM's useful workspace can be because the TPM's useful workspace must be located within that region. A demonstration of these aspects will be provided below with reference to a particular embodiment of the invention.

According to an embodiment of the invention, the rotation axes of the first revolute pairs of each leg can be mutually orthogonal and incident at a single fixed point in the frame.

According to an embodiment of the invention, the rotation axes of the fifth revolute pairs of each leg can be mutually orthogonal and incident at a single fixed point in the mobile platform.

These characteristics prove to be particularly advantageous in terms of the TPM's small overall size as well as rigidity and construction simplicity.

According to an alternative embodiment of the invention, the rotation axes of the first revolute pairs can also be skewed and/or the rotation axes of the fifth revolute pairs can also be skewed.

The aforementioned intersection between the rotation axes is not in fact a necessary requirement of the TPM according to the invention, provided that the distance between any two of these axes is less than 20% of the diameter of the circumference passing through the center of the three cardan joints adjacent to the base and the angle formed between any two of these axes is between 70° and 110°.

According to an aspect of the invention, the translational parallel mechanism comprises an actuator for each leg. These actuators are coupled to the second revolute pair of the respective leg for its actuation.

According to an aspect of the invention, at least one of the aforementioned actuators comprises a motor with casing fixed to the frame in such a way that the motor shaft has an axis coinciding with the axis of rotation of the first revolute pair of the leg in which it is mounted. In addition, this actuator comprises a motion transmission system (for example, a bevel gear connected to the motor shaft (preferably through a reducer)) which drives the second revolute pair of the leg in which it is mounted. This solution reduces the moving masses and allows to obtain TPMs with higher dynamic performances.

In an alternative embodiment of the invention, the motor casing of the motor that drives the second revolute pair may not be fixed to the frame but to another element of the TPM.

The TPM device according to the invention is however also suitable for use without actuators in which the platform is operated from the outside and, in correspondence with the second revolute pairs of each leg, a signal connected to the rotation angle of these revolute pairs is picked up, as, for example, if it were used to make a joystick or a particular load cell, etc..

In a possible configuration of the passive TPM, i.e. without actuators, the movement of the mobile platform can be guided by an operator, who directly grasps this platform, and monitored by suitable sensors (for example an encoder for each leg) which can be mounted in place of the actuators, i.e. on the second revolute pairs of each leg.

In other words, the translational parallel mechanism can comprise a sensor for each leg (in addition to or alternatively to the actuator). These sensors are coupled to the second revolute pairs of the respective legs to generate a signal related to the angle of rotation of these revolute pairs.

According to a particular form of the invention, the TPM, in addition to the three URU-type legs already described, comprises a further leg, preferably of the RUPUR type (i.e., consisting of the serial kinematic chain revolute pair(R)-universal joint(U)-prismatic pair(P)-universal joint(U)-revolute pair(R)), which connects the mobile platform to the base to control the rotation of a tool or a gripper connected through a revolute pair to the mobile platform. This arrangement makes it possible to generate a 3T1R motion of SCARA type.

Brief description of the drawings

Characteristics and further advantages of the invention will become clearer from the detailed description below of its preferred, although not exclusive, embodiments, which are illustrated, by way of non-limiting indication, with reference to the accompanying drawings in which:

- Figure 1 is a schematic representation of a first embodiment of the translational parallel mechanism according to the invention,
- Figure 2 is a construction scheme of an i-th leg of an embodiment of the translational parallel mechanism according to the invention, and
- Figure 3 is a schematic representation of a second embodiment of the translational parallel mechanism with the fourth RUPUR leg according to the invention.

Description of embodiments of the invention

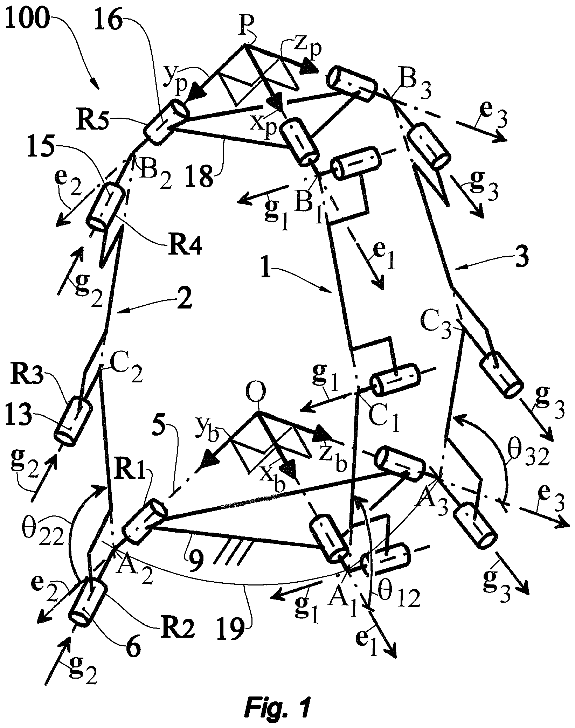

With initial reference to Figure 1, with the number 100 a translational parallel mechanism is indicated as a whole according to a first embodiment of the invention.

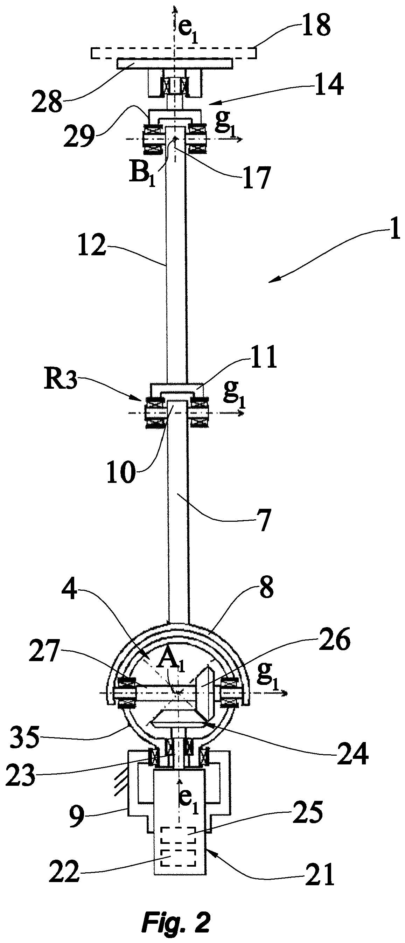

The translational parallel mechanism 100 is provided with three legs 1, 2 and 3, each of which identifies a respective kinematic chain. Figure 2 shows an embodiment of a leg.

The kinematic chain of each leg comprises a first cardan joint 4 which comprises a first revolute pair R1 and a second revolute pair R2.

The first revolute pair R1 and the second revolute pair R2 are provided with respective rotation axes indicated with the numbers 5 and 6, respectively.

With reference to Figures 1 and 2, the rotation axis 5 of the first revolute pair R1 and the rotation axis 6 of the second revolute pair R2 are incident and orthogonal to each other. The point of incidence of these rotation axes is the center of the first cardan joint 4.

The centers of the first cardan joints 4 belonging to legs 1, 2, 3 are, respectively, indicated with the symbols A1, A2 and A3.

The kinematic chain of each leg also comprises a first member 7, made in the form of a rod, connected at its first end 8 to a frame 9 by means of the first cardan joint 4 so that the rotation axis 5 of the first revolute pair R1 is fixed to the frame 9.

The first member 7 is connected at a second end 10 thereof to a first end 11 of a second member 12, made in the form of a rod, by means of a third revolute pair R3.

The third revolute pair R3 is provided with a rotation axis indicated with the reference number 13.

The kinematic chain of each leg also comprises a second cardan joint 14 comprising a fourth revolute pair R4 and a fifth revolute pair R5.

The fourth revolute pair R4 and the fifth revolute pair R5 are provided with respective rotation axes indicated with the numbers 15 and 16, respectively.

The rotation axis 15 of the fourth revolute pair R4 and the rotation axis 16 of the fifth revolute pair R5 are incident and orthogonal to each other. The point of incidence of these axes of rotation is the center of the second cardan joint 14.

The centers of the second cardan joints 14 belonging to legs 1, 2, 3 are, respectively, indicated with the symbols B1, B2 and B3.

The second member 12 is connected, or connectable, at its second end 17 to a mobile platform 18 by means of the second cardan joint 14 in such a way that the rotation axis 16 of the fifth revolute pair R5 is fixed to the mobile platform 18.

The kinematic chain of each leg 1, 2 and 3 is therefore made up of five revolute pairs R1, R2, R3, R4 and R5, in series, of which the three intermediate (R2, R3 and R4) with parallel rotation axes 6, 13 and 15 among them and the two at the ends (R1 and R5) with rotation axes 5 and 16 perpendicular to those of the other three revolute pairs.

The first revolute pairs R1 and the fifth revolute pairs R5 therefore define the ends of the related open kinematic chain and for each leg 1, 2 and 3 the rotation axis of the first and fifth revolute pairs R1,R5 are parallel and the rotation axis of the second, third and fourth revolute pairs R2,R3,R4 are parallel.

It must therefore be noted that the TPM 100 falls within the family of parallel mechanisms of 3-URU type. With reference to Figure 1, the first revolute pairs R1 and the fifth revolute pairs R5 are arranged in such a way that the rotation axis 5 of the first revolute pair R1 is parallel to the rotation axis 16 of the fifth revolute pair R5 which belongs to the same kinematic chain.

It is known in the literature (Di Gregorio R., Parenti-Castelli V., A Translational 3-DOF Parallel Manipulator. In Advances in Robot Kinematics: Analysis and Control; J. Lenarcic and M.L. Husty, Eds.; Kluwer: Norwell, MA, USA, 1998; pp. 49-58, ISBN: 978-90-481-5066-3) that, if the members of a 3-URU mechanism are manufactured and assembled (in a non-singular configuration) in such a way that, in each leg, the rotation axes of the end revolute pairs are parallel to each other and the rotation axes of the intermediate revolute pairs are all parallel, the mobile platform can only translate (i.e., it maintains constant orientation during motion) with respect to the frame.

The first revolute pairs R1 of each leg of the TPM 100 are arranged in such a way that the relative axes of rotation 5 are mutually orthogonal and incident in point O of the base (see Fig. 1).

In addition, the fifth revolute pairs R5 of each leg of the TPM 100 are arranged in such a way that the relative axes of rotation 16 are mutually orthogonal and incident in point P of the platform (see Fig. 1).

Furthermore, the first cardan joints 4 are arranged in such a way that their centers A1, A2, and A3 identify the vertices of a first triangle fixed to the frame 9 which is geometrically similar to a second triangle, fixed to the mobile platform 18, having as vertices the centers B1, B2 and B3 of the second universal joints 14.

The above-described TPM 100 has a large free-from-singularity region of the operational space of the mobile platform 18 within which the useful workspace of this machine can be placed.

The demonstration of the large region of the operational space of the mobile platform 18 without singularities is shown below with reference to Figure 1.

First of all, consider the following definitions/assumptions:

- $Ox_by_bz_b$ and $Px_py_pz_p$ are two Cartesian reference systems fixed respectively to the frame 9 and to the mobile platform 18; without introducing restrictions, these two reference systems have been chosen with their homologous axes parallel (the parallelism of the coordinate axes is maintained during the platform motion because the mechanism in question is a translational parallel mechanism of 3-URU type);

- $A_i$ with i=1,2,3 are the centers of the first cardan joints 4;
- $B_i$ with i=1,2,3 are the centers of the second cardan joints 14;

  Without losing generality (see Di Gregorio R., Parenti-Castelli V., A Translational 3-DOF Parallel Manipulator. In Advances in Robot Kinematics: Analysis and Control; J. Lenarcic and M.L. Husty, Eds.; Kluwer: Norwell, MA, USA, 1998; pp. 49-58, ISBN: 978-90-481-5066-3), it is assumed that, in the i-th leg, i=1,2,3, the points $A_i$ and $B_i$ lie on the same plane perpendicular to the rotation axes of the three intermediate revolute pairs (R2, R3 and R4), which intersects at point $C_i$ the rotation axis of the third revolute pair R3 of the i-th leg;
- $e_1$, $e_2$, and $e_3$ are unit vectors of the coordinate axes $x_b$, $y_b$, and $z_b$ ($x_p$, $y_p$, and $z_p$), respectively, and, at the same time, unit vectors of the three rotation axes of the first revolute pairs R1 and of the fifth revolute pair R5 of each leg;
- $g_i$, i=1, 2, 3, is the unit vector that identifies the direction of the rotation axes of the three intermediate revolute pairs R2, R3 and R4 of the i-th leg.

Moreover:

- $d_b = A_1O = A_2O = A_3O$;
- $d_p = B_1P = B_2P = B_3P$;
- $\theta_{ij}$, i=1,2,3, and j=1,..., 5, is the joint variable of the j-th revolute pair of the i-th leg; the variables of the actuated joints (or, in the case of passive mechanism, of the joints equipped with sensors) are the angles $\theta_{i2}$, i=1,2,3;
- $f_i = A_iC_i$, for i=1,2,3;
- $\mathbf{p} = (P - O) = x\mathbf{e}_1 + y\mathbf{e}_2 + z\mathbf{e}_3$ , where $(x, y, z)^T$ collects the coordinates of point P measured in $Ox_by_bz_b$ ;
- $\mathbf{a}_i = (A_i - O) = d_b\mathbf{e}_i$ , for i=1,2,3 ;
- $\mathbf{b}_i = (B_i - O) = \mathbf{p} + d_p\mathbf{e}_i$ , for i=1,2,3 ;
- $\mathbf{c}_i = (C_i - O) = \mathbf{a}_i + f_i\mathbf{u}_i$ , for i=1,2,3 ;
- $\mathbf{h}_i = \mathbf{g}_i \times \mathbf{e}_i$, for i=1,2,3;
- $\mathbf{u}_i = (C_i - A_i)/f_i = \cos\theta_{i2}\ \mathbf{e}_i + \sin\theta_{i2}\ \mathbf{h}_i$, for i=1,2,3.

Rotation singularities (constraint singularities)

The rotation singularities of a TPM are the configurations of the mechanism in which the mobile platform can perform an elementary rotation (that is, it can violate the constraint of pure translation imposed by the architecture of the mechanism outside the singularity) even if the actuators are locked.

The angular velocity, $\omega$, of the mobile platform can be expressed as follows:

$$\boldsymbol{\omega} = (\dot{\theta}_{i1} + \dot{\theta}_{i5})\mathbf{e}_i + (\dot{\theta}_{i2} + \dot{\theta}_{i3} + \dot{\theta}_{i4})\mathbf{g}_i \qquad\qquad \text{i=1,2,3} \quad (1)$$

The dot product of the i-th vector equation of system (1) by $\mathbf{h}_i$ yields the following linear and homogeneous system of three scalar equations in $\omega$

$$\mathbf{h}_i \cdot \boldsymbol{\omega} = 0 \qquad\qquad \text{i=1,2,3} \quad (2)$$

System (2) admits non-null solutions for $\omega$ if and only if the determinant of the coefficient matrix is equal to zero, that is, if

$$\mathbf{h}_1 \cdot (\mathbf{h}_2 \times \mathbf{h}_3) = 0 \qquad\qquad (3)$$

Equation (3) is the geometric condition that identifies the rotation singularities.

The explicit expression of $\mathbf{g}_i$ as a function of the coordinates of point P (i.e., of the mobile-platform position) can be deduced by considering that (Figure 1)

$$\mathbf{g}_i = \frac{\mathbf{e}_i \times (\mathbf{b}_i - \mathbf{a}_i)}{|\mathbf{e}_i \times (\mathbf{b}_i - \mathbf{a}_i)|} = \frac{\mathbf{e}_i \times [\mathbf{p} + (d_p - d_b)\mathbf{e}_i]}{|\mathbf{e}_i \times [\mathbf{p} + (d_p - d_b)\mathbf{e}_i]|} = \frac{\mathbf{e}_i \times \mathbf{p}}{|\mathbf{e}_i \times \mathbf{p}|} \qquad (4)$$

The introduction of formula (4) into the definition of $\mathbf{h}_i$ gives

$$h_i = g_i \times e_i = \frac{(e_i \times p) \times e_i}{|e_i \times p|} = \frac{p - (e_i \cdot p)e_i}{|e_i \times p|} \tag{5}$$

which, after the introduction of the explicit expression of $\mathbf{p}$ (i.e., $\mathbf{p} = x\mathbf{e}_1 + y\mathbf{e}_2 + z\mathbf{e}_3$), becomes

$$h_1 = \frac{ye_2 + ze_3}{\sqrt{y^2 + z^2}} \; ; \quad h_2 = \frac{xe_1 + ze_3}{\sqrt{x^2 + z^2}} \; ; \quad h_3 = \frac{xe_1 + ye_2}{\sqrt{x^2 + y^2}} \tag{6}$$

The introduction of formulas (6) into $\mathbf{h}_1 \cdot (\mathbf{h}_2 \times \mathbf{h}_3)$ yields the following equation of the surface of the operational space that is the geometric locus of the rotation singularities

$$h_1 \cdot (h_2 \times h_3) = \frac{2xyz}{\sqrt{\left(x^2 + z^2\right)\left(x^2 + y^2\right)\left(y^2 + z^2\right)}} = 0 \tag{7}$$

The analysis of equation (7) shows that the geometric locus of the rotation singularities consists of the three coordinate planes x = 0, y = 0, and z = 0. Therefore, excluding the coordinate planes, the operational space of the TPM 100 is completely devoid of rotation singularities, which means that there are eight large connected regions (the eight octants) devoid of this type of singularity and exploitable to locate the useful workspace of this mechanism.

Translation singularities

The translation singularities of a TPM are the configurations of the mechanism in which the mobile platform can perform an elementary translation even if the actuators are locked.

Since $\omega$ is zero in a configuration that is not a rotation singularity, the following expressions of the translation velocity of the mobile platform 18 hold:

$$\dot{p} = \dot{b}_i = (\dot{\theta}_{i1} e_i + \dot{\theta}_{i2} g_i) \times (b_i - a_i) + \dot{\theta}_{i3} g_i \times (b_i - c_i) \qquad i=1,2,3 \tag{8}$$

The dot products of the i-th equation (8), for i=1,2,3, by the i-th vector

$$s_i = [e_i \times (b_i - a_i)] \times [g_i \times (b_i - c_i)] = -\{[e_i \times (b_i - a_i)] \cdot g_i\}(b_i - c_i) = -[h_i \cdot (b_i - a_i)](b_i - c_i) \qquad i=1,2,3 \tag{9}$$

give the following instantaneous input-output relationship:

$$\dot{p} \cdot s_i = \dot{\theta}_{i2} [g_i \times (b_i - a_i)] \cdot s_i \qquad i=1,2,3 \tag{10}$$

When the actuators are locked (i.e., when $\dot{\theta}_{i2} = 0$ , i=1,2,3, since the actuated joint-variables are the angles $\theta_{i2}$, i=1,2,3), system (10) admits non-null solutions for $\dot{p}$ if and only if the determinant of the coefficient matrix is equal to zero, that is, if

$$s_1 \cdot (s_2 \times s_3) = - [h_1 \cdot (b_1 - a_1)] [h_2 \cdot (b_2 - a_2)] [h_3 \cdot (b_3 - a_3)] (b_1 - c_1) \cdot [(b_2 - c_2) \times (b_3 - c_3)] = 0 \tag{11}$$

Equation (11) is the geometric condition that identifies the translation singularities.

The analysis of equation (11) shows that a translation singularity occurs when at least one of the following conditions is satisfied

a) $[h_i \cdot (b_i - a_i)]=0$ at least in one leg;
b) the mixed product $(b_1 - c_1) \cdot [(b_2 - c_2) \times (b_3 - c_3)]$ is equal to zero.

Condition (a) occurs when in a leg the segment $A_iB_i$ is parallel to $e_i$. This occurs when point P of the mobile platform lies on the coordinate axis parallel to $\mathbf{e}_i$. Since the coordinate axes already belong to the geometric locus of the rotation singularities (see the above-reported demonstration), this condition does not add any further restriction to the platform motion.

Condition (b) occurs when the three segments $B_iC_i$, i = 1,2,3, are parallel to a single plane. This condition occurs in very special situations, for instance, when all the three points $C_i$ for i=1,2,3, lie on the plane (which is fixed to the mobile platform) of the triangle $B_1B_2B_3$. From an analytic point of view, the following relationships hold

$$(\mathbf{b}_i - \mathbf{c}_i) = \mathbf{p} + (d_p - d_b)\,\mathbf{e}_i - f_i\,(\cos\theta_{i2}\,\mathbf{e}_i + \sin\theta_{i2}\,\mathbf{h}_i) \qquad\qquad i=1,2,3 \quad (12)$$

which, when expanded, give

$$\mathbf{b}_1 - \mathbf{c}_1 = [x + (d_p - d_b) - f_1\cos\theta_{12}]\mathbf{e}_1 + [1 - f_1\sin\theta_{12}\,k_1]\,y\mathbf{e}_2 + [1 - f_1\sin\theta_{12}\,k_1]\,z\mathbf{e}_3 \qquad (13a)$$

$$\mathbf{b}_2 - \mathbf{c}_2 = [1 - f_2\sin\theta_{22}\,k_2]\,x\mathbf{e}_1 + [y + (d_p - d_b) - f_2\cos\theta_{22}]\mathbf{e}_2 + [1 - f_2\sin\theta_{22}\,k_2]\,z\mathbf{e}_3 \qquad (13b)$$

$$\mathbf{b}_3 - \mathbf{c}_3 = [1 - f_3\sin\theta_{32}\,k_3]\,x\mathbf{e}_1 + [1 - f_3\sin\theta_{32}\,k_3]\,y\mathbf{e}_2 + [z + (d_p - d_b) - f_3\cos\theta_{32}]\mathbf{e}_3 \qquad (13c)$$

with

$$k_1 = \frac{1}{\sqrt{y^2 + z^2}}\,, \quad k_2 = \frac{1}{\sqrt{x^2 + z^2}}\,, \quad k_3 = \frac{1}{\sqrt{x^2 + y^2}}\,, \qquad\qquad (14)$$

The introduction of the explicit expressions (13) into the mixed product $(\mathbf{b}_1 - \mathbf{c}_1) \cdot [(\mathbf{b}_2 - \mathbf{c}_2) \times (\mathbf{b}_3 - \mathbf{c}_3)]$ yields the following equation of the surface of the operational space that is the geometric locus of the translation singularities

$$(\mathbf{b}_1 - \mathbf{c}_1) \cdot [(\mathbf{b}_2 - \mathbf{c}_2) \times (\mathbf{b}_3 - \mathbf{c}_3)] = xyz\,[1 - r_2r_3 - r_1r_2 - r_1r_3 + 2\,r_1r_2r_3] + xy\,q_3(1 - r_1r_2) +$$

$$+ xz\,q_2(1 - r_1r_3) + yz\,q_1(1 - r_2r_3) + x\,q_2q_3 + y\,q_1q_3 + z\,q_1q_2 + q_1q_2q_3 = 0 \qquad\qquad (15)$$

where the following definitions have been introduced

$$r_1 = [1 - f_1\,k_1\,\sin\theta_{12}]; \qquad r_2 = [1 - f_2\,k_2\,\sin\theta_{22}]; \qquad r_3 = [1 - f_3\,k_3\,\sin\theta_{32}] \qquad\qquad (16a)$$

$$q_1 = (d_p - d_b) - f_1\cos\theta_{12}\,; \qquad q_2 = (d_p - d_b) - f_2\cos\theta_{22}\,; \qquad q_3 = (d_p - d_b) - f_3\cos\theta_{32} \qquad (16b)$$

Equation (15) contains the geometric parameters $(d_p, d_b, f_1, f_2, f_3)$ of the TPM. Consequently, it can be exploited to size this machine in such a way as to move away the translation singularities from the region of the operational space in which the designer intends to place the useful workspace of the TPM.

Therefore, it can be concluded that the TPM 100 has a large region of the operational space without singularities within which the useful workspace of this machine can be placed.

It must be noted that the above-presented demonstration concerns the geometry inherent in the embodiment of the TPM shown in Figure 1. However, the region of the operational space without singularities still remains large when this geometry is modified as long as it is not completely distorted (Di Gregorio R., Parenti-Castelli V., Influence of the geometric parameters of the 3-UPU parallel mechanism on the singularity loci. In: Procs. Of the Int. Workshop on Parallel Kinematic Machines - PKM'99, Milan, Italy, November 30, 1999; pp. 79-86, ISBN: 88-900426-0-5).

In particular, the advantages achieved by the TPM 100 shown in Figure 1 are also achieved by different embodiments of the translational parallel mechanism according to the invention, that is, with the rotation axes 5 of the first revolute pairs R1 which are skewed or, in any case, do not intersect all in the first point O and/or with the rotation axes 16 of the fifth revolute pairs R5 which are skewed or, in any case, not all intersecting in the second point P, provided that the frame is sized in such a way that the distance between any two of the rotation axes 5 of the revolute pairs R1 is less than 20% of the diameter of the circumference passing through points A1, A2, and A3, which are the centers of the first cardan joints 4, and the mobile platform is dimensioned in such a way that the distance between any two axes of rotation 16 of the revolute pairs R5 is less than 20% of the diameter of the circumference passing through points A1, A2, and A3.

Furthermore, the advantages achieved by the TPM 100 shown in Figure 1 are also achieved by different embodiments of the translational parallel mechanism according to the invention, that is, with the rotation axes 5 of the first revolute pairs R1 not mutually orthogonal and with the rotation axes 16 of the fifth revolute pairs R5 not mutually orthogonal, provided that the angle formed between any two rotation axes 5 of the first revolute pairs R1 is between 70° and 110° and the angle formed between any two rotation axes 16 of the fifth revolute pairs R5 is between 70° and 110°.

The translational parallel mechanism 100 comprises an actuator 21 for each kinematic chain, that is, for each leg. These actuators are coupled to the second revolute pair R2 of the respective kinematic chains for their actuation.

With particular reference to Figure 2, each actuator 21 comprises an electric motor 22 with casing fixed to the frame 9 in such a way that the shaft 23 of the electric motor 22 has an axis coinciding with the axis of rotation 5 of the first revolute pair R1 of the leg relating to this actuator 21.

The actuator 21 also comprises a motion-transmission system 24 comprising a reducer 25 and a bevel gear 26. The bevel gear 26 is driven by the shaft 23 of the electric motor 22 and, in turn, drives the pin 27 of the second revolute pair R2.

Figure 2 also shows an embodiment of the cross link 35 of the first cardan joint 4, connected by means of bearings to the frame 9 and to the pin 27 of the second revolute pair R2. The first member 7 is integral with the pin 27 in its first fork-ended end 8 and is connected to the second member 12 by means of the third revolute pair R3. The second member 12 is connected to a flange 28 by means of the second cardan joint 14 whose cross link is indicated with the number 29. The flange 28 is intended to be fixed to the mobile platform 18.

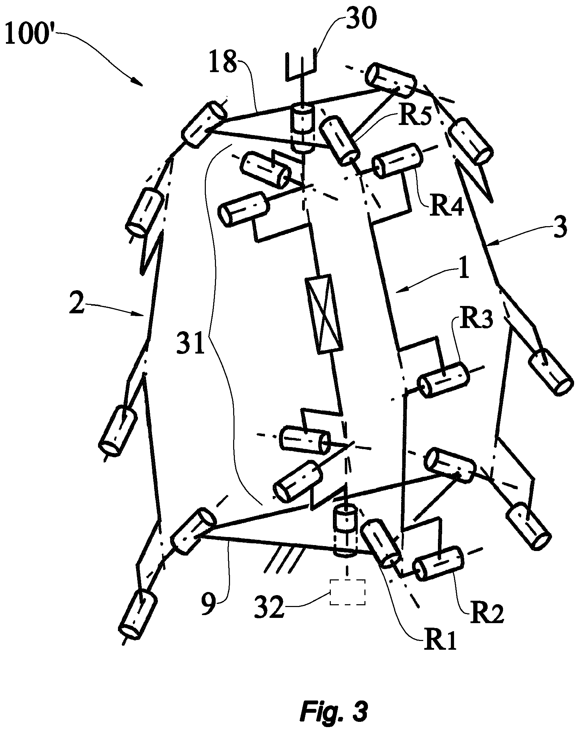

Figure 3 shows an alternative embodiment of the translational parallel mechanism which will be indicated with the reference number 100'.

Compared to the TPM 100 shown in Figure 1, the translational parallel mechanism 100' includes an additional kinematic chain. The mobile platform 18 of the TPM 100' is connected by means of a revolute pair to a tool 30 which is the output member of this further kinematic chain (leg) 31 of RUPUR type, which acts as a transmission system driven by an electric motor 32, whose casing is fixed to the frame 9 and whose motor shaft is connected by means of a revolute pair to the frame 9.

The tool 30 can be a gripper.

The invention thus achieves the proposed purpose, while obtaining the aforementioned advantages.

In particular, the fact that the kinematic chains preferably include only revolute pairs makes the TPM object of the invention constructively simple to manufacture.

The TPM object of the invention also turns out to be a non-overconstrained architecture, which allows to define machining tolerances that are not particularly tight on most of the geometric constants of the mechanism, thus obtaining low machining costs and assembly.

Furthermore, without prejudice to the parallelisms between the axes of the revolute pairs in each assembled leg, all other geometric errors do not affect the translation of the mobile platform and can be eliminated through calibration procedures that do not intervene on the mechanism, but simply involve the modification of some constants in the TPM model used by the control system.

In addition, the overall size of the TPM according to the invention can be comparable with those of the Delta robot while its structure allows a better distribution of loads and higher stiffness.

**Claims**

1. A translational parallel mechanism (100; 100') comprising three legs (1, 2, 3), in which each leg is a kinematic chain which comprises:

    • a first cardan joint (4) comprising a first revolute pair (R1) and a second revolute pair (R2),
    • a first member (7) connected, at a first end (8) thereof, to a frame (9) by means of the first cardan joint (4) in such a manner that the rotation axis (5) of the first revolute pair (R1) is fixed to the frame (9), and connected, at a second end (10) thereof, to a first end (11) of a second member (12) by means of a third revolute pair (R3),
    • a second cardan joint (14) comprising a fourth revolute pair (R4) and a fifth revolute pair (R5),
    • the second member (12) which is connected, at a second end (17) thereof, to a movable platform (18) by means of the second cardan joint (14) in such a manner that the rotation axis (16) of the fifth revolute pair (R5) is fixed to the movable platform (18),

    wherein the first revolute pairs (R1) and fifth revolute pairs (R5) define the ends of the respective kinematic chains, wherein for each leg (1, 2, 3) the rotation axis of the first and fifth revolute pairs (R1,R5) are parallel and the rotation axis of the second, third and fourth revolute pairs (R2,R3,R4) are parallel, wherein the rotation axes (5) of the first revolute pairs (R1) of each leg (1, 2, 3) are arranged in such a way that they are neither coplanar nor parallel to a single plane and in such a way that they are incident at a single fixed point (O) in the frame (9) or that the distance between any two of these rotation axes (5) is less than or equal to 20% of the diameter of the circumference (19) passing through the centers of the first cardan joints (4), and wherein the rotation axes (16) of the fifth revolute pairs (R5) of each leg (1, 2, 3) are arranged in such a way that they are neither coplanar nor parallel to a single plane and in such a way that they are incident at a single fixed point (P) in the movable platform (18) or that the distance between any two of these rotation axes (16) is less than or equal to 20% of the diameter of the circumference (19) passing through the centers of the first cardan joints (4).

2. A translational parallel mechanism according to claim 1, wherein the rotation axes (5) of the first revolute pairs (R1) are arranged in such a manner that the angle formed by any two of these axes is between 70° and 110°.

3. A translational parallel mechanism according to claim 2, wherein the rotation axes (5) of the first revolute pairs (R1) of each leg (1, 2, 3) are mutually orthogonal and incident at the single fixed point (O) in the frame (9).

4. A translational parallel mechanism according to any one of the preceding claims, wherein the rotation axes (16) of the fifth revolute pairs (R5) are arranged in such a manner that the angle formed by any two of these axes is between 70° and 110°.

5. A translational parallel mechanism according to claim 4, wherein the rotation axes (16) of the fifth revolute pairs (R5) of each leg (1, 2, 3) are mutually orthogonal and incident at the single fixed point (P) in the movable platform (18).

6. A translational parallel mechanism according to any one of the preceding claims, comprising an actuator (21) for each leg, the actuators (21) being connected to the second revolute pairs (R2) of the respective legs for the actuation thereof.

7. A translational parallel mechanism according to claim 6, wherein at least one of the actuators (21) comprises a motor (22) with a casing which is fixed to the frame (9) in such a manner that the shaft (23) of the motor (22) has an axis coincident with the rotation axis (5) of the first revolute pair (R1) of the leg in which it is mounted, and a motion transmission system (24) suitable for actuating the second revolute pair (R2) of the leg in which it is mounted.

8. A translational parallel mechanism according to any one of the preceding claims, comprising a sensor for each leg, the sensors being connected to the second revolute pairs (R2) of the respective legs in order to generate a signal which is correlated with the angle of rotation of these revolute pairs (R2).

9. A translational parallel mechanism according to any one of the preceding claims, comprising an additional leg which is constituted by a kinematic chain (31) which connects the movable platform (18) to the frame (9) in order to control the rotation of a tool or a gripper which is connected by means of a revolute pair to the movable platform (18).

10. A translational parallel mechanism according to claim 9, wherein the kinematic chain (31) of the additional leg is of the RUPUR type.

**Patentansprüche**

1. Translatorischer Parallelmechanismus (100; 100') mit drei Beinen (1, 2, 3), wobei jedes Bein eine kinematische Kette ist, die aufweist:

   - ein erstes Kardangelenk (4) mit einem ersten Drehpaar (R1) und einem zweiten Drehpaar (R2),
   - ein erstes Element (7), das an seinem ersten Ende (8) mit einem Rahmen (9) über das erste Kardangelenk (4) derart verbunden ist, dass die Drehachse (5) des ersten Drehpaares (R1) am Rahmen (9) fixiert ist und an seinem zweiten Ende (10) mit einem ersten Ende (11) eines zweiten Elements (12) über ein drittes Drehpaar (R3) verbunden ist,
   - ein zweites Kardangelenk (14) mit einem vierten Drehpaar (R4) und einem fünften Drehpaar (R5),
   - wobei das zweite Element (12), das an seinem zweiten Ende (17) mit einer beweglichen Plattform (18) über das zweite Kardangelenk (14) derart verbunden ist, dass die Drehachse (16) des fünften Drehpaares (R5) an der beweglichen Plattform (18) fixiert ist,
- wobei die ersten Drehpaare (R1) und fünften Drehpaare (R5) die Enden der jeweiligen kinematischen Ketten bilden, wobei für jedes Bein (1, 2, 3) die Drehachsen der ersten und fünften Drehpaare (R1, R5) parallel sind und die Drehachsen der zweiten, dritten und vierten Drehpaare (R2, R3, R4) parallel sind, wobei die Drehachsen (5) der ersten Drehpaare (R1) eines jeden Beins (1, 2, 3) derart angeordnet sind, dass sie weder koplanar noch parallel zu einer einzigen Ebene sind und derart, dass sie in einem einzigen fixierten Punkt (O) des Rahmens (9) zusammentreffen oder dass der Abstand zwischen zwei beliebigen dieser Drehachsen (5) kleiner oder gleich 20% des Durchmessers des durch die Mittelpunkte der ersten Kardangelenke (4) verlaufenden Umfangs (19) ist, und wobei die Drehachsen (16) der fünften Drehpaare (R5) jedes Beins (1, 2, 3) derart angeordnet sind, dass sie weder koplanar noch parallel zu einer einzigen Ebene sind und dass sie an einem einzigen fixierten Punkt (P) in der beweglichen Plattform (18) zusammentreffen oder dass der Abstand zwischen zwei beliebigen dieser Drehachsen (16) kleiner als oder gleich 20% des Durchmessers des durch die Mittelpunkte der ersten Kardangelenke (4) verlaufenden Umfangs (19) ist.

2. Translatorischer Parallelmechanismus nach Anspruch 1, wobei die Drehachsen (5) der ersten Drehpaare (R1) derart angeordnet sind, dass der durch zwei beliebige dieser Achsen gebildete Winkel zwischen 70° und 110° liegt.

3. Translatorischer Parallelmechanismus nach Anspruch 2, wobei die Drehachsen (5) der ersten Drehpaare (R1) jedes Beins (1, 2, 3) zueinander orthogonal sind und am einzigen fixierten Punkt (O) im Rahmen (9) zusammentreffen.

4. Translatorischer Parallelmechanismus nach einem der vorhergehenden Ansprüche, wobei die Drehachsen (16) der fünften Drehpaare (R5) derart angeordnet sind, dass der von zwei beliebigen dieser Achsen gebildete Winkel zwischen 70° und 110° liegt.

5. Translatorischer Parallelmechanismus nach Anspruch 4, wobei die Drehachsen (16) der fünften Drehachsen (16) der fünften Drehpaare (R5) jedes Beins (1, 2, 3) orthogonal zueinander sind und am einzigen fixierten Punkt (P) in der beweglichen Plattform (18) zusammentreffen.

6. Translatorischer Parallelmechanismus nach einem der vorhergehenden Ansprüche mit einem Betätigungselement (21) für jedes Bein, wobei die Betätigungselemente (21) mit den zweiten Drehpaaren (R2) der jeweiligen Beine zu deren Betätigung verbunden sind.

7. Translatorischer Parallelmechanismus nach Anspruch 6, wobei zumindest eines der Betätigungselemente (21) einen Motor (22) mit einem Gehäuse aufweist, das am Rahmen (9) derart fixiert ist, dass die Welle (23) des Motors (22) eine Achse aufweist, die mit der Drehachse (5) des ersten Drehpaars (R1) des Beins, in dem sie montiert ist, übereinstimmt, und ein Bewegungsübertragungssystem (24) aufweist, das zur Betätigung des zweiten Drehpaars (R2) des Beins, in dem es montiert ist, geeignet ist.

8. Translatorischer Parallelmechanismus nach einem der vorhergehenden Ansprüche mit einem Sensor für jedes Bein, wobei die Sensoren mit den zweiten Drehpaaren (R2) der jeweiligen Beine verbunden sind, um ein Signal zu erzeugen, das mit dem Drehwinkel dieser Drehpaare (R2) korreliert.

9. Translatorischer Parallelmechanismus nach einem der vorhergehenden Ansprüche mit einem zusätzlichen Bein, das aus einer kinematischen Kette (31) besteht, die die bewegliche Plattform (18) mit dem Rahmen (9) verbindet, um die Drehung eines Werkzeugs oder eines Greifers zu steuern, das bzw. der über ein Drehpaar mit der beweglichen Plattform (18) verbunden ist.

10. Translatorischer Parallelmechanismus nach Anspruch 9, wobei die kinematische Kette (31) des Zusatzbeins ein RUPUR-Typ ist.

**Revendications**

1. Mécanisme parallèle de translation (100 ; 100') comprenant trois branches (1, 2, 3) dans lequel chaque branche est une chaîne cinématique qui comprend :

• un premier joint de cardan (4) comprenant une première paire rotoïde (R1) et une deuxième paire rotoïde (R2),
• un premier élément (7) relié, au niveau d'une première extrémité (8) de celui-ci, à un cadre (9) au moyen du premier joint de cardan (4) de telle sorte que l'axe de rotation (5) de la première paire rotoïde (R1) soit fixé au cadre (9), et relié, au niveau d'une deuxième extrémité (10) de celui-ci, à une première extrémité (11) d'un deuxième élément (12) au moyen d'une troisième paire rotoïde (R3),
• un deuxième joint de cardan (14) comprenant une quatrième paire rotoïde (R4) et une cinquième paire rotoïde (R5),
• le deuxième élément (12) qui est relié, au niveau d'une deuxième extrémité (17) de celui-ci, à une plateforme mobile (18) au moyen du deuxième joint de cardan (14) de telle sorte que l'axe de rotation (16) de la cinquième paire rotoïde (R5) soit fixé à la plateforme mobile (18),

dans lequel les premières paires rotoïdes (R1) et les cinquièmes paires rotoïdes (R5) définissent les extrémités des chaînes cinématiques respectives, dans lequel pour chaque branche (1, 2, 3) les axes de rotation des premières et cinquièmes paires rotoïdes (R1, R5) sont parallèles et les axes de rotation des deuxièmes, troisièmes et quatrièmes paires rotoïdes (R2, R3, R4) sont parallèles, dans lequel les axes de rotation (5) des premières paires rotoïdes (R1) de chaque branche (1, 2, 3) sont agencés de telle sorte qu'ils ne soient ni coplanaires ni parallèles à un plan unique et de telle sorte qu'ils soient incidents au niveau d'un point fixe unique (O) dans le cadre (9) ou que la distance entre deux quelconques de ces axes de rotation (5) soit inférieure ou égale à 20 % du diamètre de la circonférence (19) passant par les centres des premiers joints de cardan (4), et dans lequel les axes de rotation (16) des cinquièmes paires rotoïdes (R5) de chaque branche (1, 2, 3) sont agencés de telle sorte qu'ils ne soient ni coplanaires ni parallèles à un plan unique et de telle sorte qu'ils soient incidents au niveau d'un point fixe unique (P) dans la plateforme mobile (18) ou que la distance entre deux quelconques de ces axes de rotation (16) soit inférieure ou égale à 20 % du diamètre de la circonférence (19) passant par les centres des premiers joints de cardan (4).

2.  Mécanisme parallèle de translation selon la revendication 1, dans lequel les axes de rotation (5) des premières paires rotoïdes (R1) sont agencés de telle sorte que l'angle formé par deux quelconques de ces axes soit compris entre 70° et 110°.

3.  Mécanisme parallèle de translation selon la revendication 2, dans lequel les axes de rotation (5) des premières paires rotoïdes (R1) de chaque branche (1, 2, 3) sont mutuellement orthogonaux et incidents au niveau d'un point fixe unique (O) dans le cadre (9).

4.  Mécanisme parallèle de translation selon l'une quelconque des revendications précédentes, dans lequel les axes de rotation (16) des cinquièmes paires rotoïdes (R5) sont agencés de telle sorte que l'angle formé par deux quelconques de ces axes soit compris entre 70° et 110°.

5.  Mécanisme parallèle de translation selon la revendication 4, dans lequel les axes de rotation (16) des cinquièmes paires rotoïdes (R5) de chaque branche (1, 2, 3) sont mutuellement orthogonaux et incidents au niveau du point fixe unique (P) dans la plateforme mobile (8).

6.  Mécanisme parallèle de translation selon l'une quelconque des revendications précédentes, comprenant un actionneur (21) pour chaque branche, les actionneurs (21) étant reliés aux deuxièmes paires rotoïdes (R2) des branches respectives pour actionner celles-ci.

7.  Mécanisme parallèle de translation selon la revendication 6, dans lequel au moins l'un des actionneurs (21) comprend un moteur (22) avec un carter qui est fixé au cadre (9) de telle sorte que l'arbre (23) du moteur (22) ait un axe qui coïncide avec l'axe de rotation (5) de la première paire rotoïde (R1) de la branche sur laquelle il est monté, et un système de transmission de mouvement (24) approprié pour actionner la deuxième paire rotoïde (R2) de la branche sur laquelle il est monté.

8.  Mécanisme parallèle de translation selon l'une quelconque des revendications précédentes, comprenant un capteur pour chaque branche, les capteurs étant reliés aux deuxièmes paires rotoïdes (R2) des branches respectives afin de générer un signal qui est corrélé à l'angle de rotation de ces paires rotoïdes (R2).

9.  Mécanisme parallèle de translation selon l'une quelconque des revendications précédentes, comprenant une branche supplémentaire qui est constituée d'une chaîne cinématique (31) qui relie la plateforme mobile (18) au cadre (9) afin de commander la rotation d'un outil ou d'un dispositif de préhension qui est relié au moyen d'une paire rotoïde à la plateforme mobile (18).

10. Mécanisme parallèle de translation selon la revendication 9, dans lequel la chaîne cinématique (31) de la branche supplémentaire est du type RUPUR.

**Fig. 1**

**Fig. 2**

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4976582 A
- US 6729202 B2

- RU 110326 U1

### Non-patent literature cited in the description

- **HUDA, S. ; TAKEDA, Y.** Kinematic analysis and synthesis of a 3-URU pure rotational parallel mechanism with respect to singularity and workspace. *J. of Adv. Mech. Design, System and Manufacturing,* 2007, vol. 1 (1), 81-92
- **HUDA, S.; ; TAKEDA, Y.** Kinematic Design of 3-URU Pure Rotational Parallel Mechanism with Consideration of Uncompensatable Error. *J. of Adv. Mech. Design, Systems, and Manufacturing,* 2008, vol. 2 (5), 874-886
- Novel Reconfigurable 3-URU Parallel Platform. **CARBONARI, L. ; CORINALDI, D. ; PALPACELLI, M. ; PALMIERI, G. ; CALLEGARI, M. A.** Advances in Service and Industrial Robotics. Springer: Dordrecht, 2018, 63-73
- **L. CARBONARI ; D. CORINALDI ; G. PALMIERI ; M. PALPACELLI.** Kinematics of a Novel 3-URU Reconfigurable Parallel Robot. *2018 International Conference on Reconfigurable Mechanisms and Robots (ReMAR),* 2018, 1-7

- **HUDA, S. ; TAKEDA, Y. ; HANAGASAKI, S.** Kinematic design of 3-URU pure rotational parallel mechanism to perform precise motion within a large workspace. *Meccanica,* 2011, vol. 46, 89-100, https://doi.org/10.1007/s11012-010-9400-2
- **GOSSELIN C.M. ; ANGELES J.** Singularity analysis of closed-loop kinematic chains. *IEEE Trans. Robot. Automat.,* 1990, vol. 6 (3), 281-290
- **ZLATANOV D. ; FENTON R.G. ; BENHABIB B.** A unifying framework for classification and interpretation of mechanism singularities. *ASME J. Mech. Des.,* 1995, vol. 117 (4), 566-572
- A Translational 3-DOF Parallel Manipulator. **DI GREGORIO R. ; PARENTI-CASTELLI V.** Advances in Robot Kinematics: Analysis and Control. Kluwer, 1998, 49-58
- **DI GREGORIO R. ; PARENTI-CASTELLI V.** Influence of the geometric parameters of the 3-UPU parallel mechanism on the singularity loci. *Procs. Of the Int. Workshop on Parallel Kinematic Machines,* 30 November 1999, ISBN ISBN: 88-900426-0-5, 79-86